# EUROPÄISCHE PATENTSCHRIFT

(11) **EP 3 095 411 B1**
(45) Veröffentlichungstag und Bekanntmachung des Hinweises auf die Patenterteilung: **25.03.2020**
(21) Anmeldenummer: 15168860.3
(22) Anmeldetag: 22.05.2015
(51) Int. Cl.: A61C 13/00, B23Q 3/06

(54) **DETALFRÄSROHLINGHALTERADAPTER SOWIE WERKSTÜCKHALTER**
DENTAL MILLING BLANK HOLDER ADAPTER AND WORKPIECE HOLDER
ADAPTATEUR DE SUPPORT D'ÉBAUCHE DENTAIRE DE FRAISAGE ET SUPPORT DE PIÈCE

(43) Veröffentlichungstag der Anmeldung: 23.11.2016
(73) Patentinhaber: Ivoclar Vivadent AG, 9494 Schaan (LI)
(72) Erfinder: Konrad, Erich, 6800 Feldkirch (AT)
(74) Vertreter: Baronetzky, Klaus

(56) Entgegenhaltungen:
- DE-A1-102008 030 050
- TW-A- 201 444 537
- US-A1- 2009 130 634
- US-A1- 2012 214 133

## Beschreibung

Die Erfindung betrifft einen Dentalfräsblockhalteradapter gemäß dem Oberbegriff des Anspruchs 1, wobei hier der Begriff "Fräsblock" sowie allgemein der Vorgang des Fräsens sämtlicher spanabhebenden Bearbeitungen mit umfassen soll, insbesondere auch Schleifen, mit dem Schwerpunkt auf dem Fräsen von Dentalrestaurationen aus Rohlingen und mit besonderem Schwerpunkt auf dem Fräsen von Keramiken und Keramikblöcken.

Dentalrestaurationen aus Keramik - aber häufig auch solche aus Kunststoff oder Komposit - werden häufig in mehrachsigen Werkzeugmaschinen hergestellt, in dem ein Rohling spanabhebend bearbeitet wird. Eine derartige Werkzeugmaschine kann beispielsweise eine vierachsige oder fünfachsige Fräsmaschine sein. Die zu fräsende Dentalkeramik kann als Rohling in Form einer runden Scheibe vorliegen, oder als Rohlingblock, der auf einem Blockhalter aufgeklebt ist. Ein derartiger Block ist typischerweise quaderförmig mit abgerundeten Ecken.

Für die Führung und Halterung in der Dentalfräsmaschine ist häufig ein Werkstückhalter mit zwei einander gegenüberliegenden Klemmleisten vorgesehen, der dann vier, sechs oder auch acht Rohlinge eingespannt hält, wobei die Schäfte der Dentalfräsblockhalter an Klemmhaltern gelagert sind, und zwar derart, dass eine Hälfte der Rohlinge der anderen Hälfte der Rohlinge gegenüberliegt und die freien Enden der Rohlinge je aufeinander zu weisen.

Der Halter muss erheblichen Kräften standhalten, entsprechend den Bearbeitungskräften durch die Dentalfräsmaschine oder Dentalschleifmaschine. Wenn er kreisrund ausgebildet ist, ist es erforderlich, über eine Verdrehsicherung zu gewährleisten, dass sich der Rohling oder Fräsblock im Betrieb nicht zusammen mit seinem Halter verdreht. Diese Gefahr besteht nicht, wenn ein eckiger Querschnitt für den Halter gewählt wird, der mit einer entsprechenden Werkstückaufnahme zusammenwirkt. Daher hat sich eine derartige Halteraufnahme besonders bewährt und wird auch häufig verwendet.

Um ein Lagerspiel auszuschalten, ist bei einem derartigen Halter bevorzugt mindestens eine Schrägfläche vorgesehen, auf welche der Einspanndruck des Klemmhalters ausgeübt wird, so dass die Lagerkräfte hauptsächlich zwischen der Schrägfläche und der gegenüberliegenden Ecke beziehungsweise an diese angrenzenden Seitenflächen des Halters aufgenommen werden.

Auch wenn ein derartiger Halter technisch besonders gut ist, werden aus Kostengründen häufig runde Halter mit kleinerem Querschnitt verwendet. Bei diesen besteht die Verdrehsicherung dann typischerweise aus einer kurzen Nut im Flansch des Halters, in die eine entsprechende Nase des Werkstückhalters eingreifen soll.

Wenn der Benutzer allerdings den Halter nicht weit genug einsteckt, besteht die Gefahr, dass die Nase nicht in die Nut einrastet. Dann geht die Verdrehsicherung verloren, und es besteht bei nicht ausreichender Klemmkraft die erhebliche Gefahr, dass sich der Halter beim Fräsen des Rohlings leicht verdreht.

Die gilt in besonderem Maße, wenn die Verdrehsicherung - was aus Gründen der bessere Drehmomentübertragung an sich günstig ist - am Flansch des Halters angebracht ist, der typischerweise eine begrenzte Dicke aufweist, beispielsweise 1 mm.

Während ein starkes Verdrehen sofort am mangelhaften Fräsergebnis erkannt wird, besteht bei einem nur leichten Verdrehen beispielsweise um 1° bis 2° die Gefahr, dass die Dentalrestauration, also beispielsweise eine zu erstellende Krone, missgestaltet ist, was nachteilige Auswirkungen entweder auf die Okklusion, auf die Retention oder auch auf die Ästhetik oder auf verschiedene dieser Gesichtspunkte haben kann.

Eine spezielle Art der Verdrehsicherung lässt sich beispielsweise der EP 0 480 209 A1 entnehmen. Bei dieser Lösung ist eine starke Einschnürung des Halters vorgesehen, der den Halter insgesamt an dieser Stelle allerdings bruchgefährdet macht.

Ein weiteres Beispiel für eine Lösung mit formgegebener Verdrehsicherung ist die aus der WO 2002/09612 A1 bekannte Lösung. Dort ist der Halter als Sechskant ausgebildet, was dem Benutzer sechs verschiedene Steckpositionen in der Werkstückaufnahme ermöglicht.

Rohlinge sind häufig - wie auch aus Fig. 4a und 4b der WO 2002/09612 A1 ersichtlich ist - quaderförmig mit unterschiedlichen Querabmessungen, also einer anderen Länge als Breite.

Gerade bei den vorstehend genannten Werkstückaufnahmen mit vier, sechs oder gar acht Steckpositionen ist es andererseits günstig, wenn Steckpositionen eingenommen werden können, die um 90° gegeneinander versetzt sind. Dies vermag der aus der WO 2002/09612 A1 bekannte Halter nicht zu leisten, denn er ermöglicht lediglich Steckpositionen im Winkel von 60° bzw. 120°, nicht jedoch im Winkel von 90°.

Es sind auch bereits seit längerem Adapter für Halter bekannt, für kreisrunde Halter beispielsweise aus der DE 10 2007 043 837 B4 und der DE 10 2008 030 050 A1 bekannte Adapter. Bei dieser Lösung wird der Halter klemmend in den Adapter eingeführt, wobei die recht geringe Materialstärke des dortigen Sacklochs des Adapters ausgenutzt wird, um eine klemmende Elastizität bereitzustellen.

Eine derartige Lösung ist zur Bereitstellung der Passung zwischen verschiedenen Werkstückaufnahmen und Haltern im Grunde ausgesprochen günstig. Sie kann auch bei beengten Platzverhältnissen zum Einsatz kommen, denn der Halter ist in dem Adapter vollständig aufgenommen. Die Dauerhaltbarkeit bei häufigem Wechsel des Adapters könnte jedoch besser sein, und die Verdrehsicherung hängt stark davon ab, inwiefern der Halter und das Sackloch des Adapters von der Kreisform abweichen.

Demgegenüber liegt der Erfindung die Aufgabe zugrunde, einen Dentalfräsblockhalteradapter zu schaffen, der hinsichtlich der Dauerhaltbarkeit noch verbessert ist, und auch noch besser anpassbar ist.

Diese Aufgabe wird erfindungsgemäß durch Anspruch 1 gelöst. Vorteilhafte Weiterbildungen ergeben sich aus den Unteransprüchen.

Offenbart ist weiter auch ein Werkstückhalter.

Erfindungsgemäß ist es bei einem Dentalfräsblockhalteradapter vorgesehen, in einer Ausführungsform einen freien Bereich des Umfangs der Werkstückaufnahme auszunutzen, um dort eine Materialverdickung vorzunehmen und dort eine Befestigungsschraube unterzubringen.

Diese ist in einem Innengewinde des Adapters geführt, das mindestens 5, insbesondere 8 bis 10, Gewindegänge hat, um die erforderliche Befestigungskraft aufbringen zu können und fixiert unmittelbar den Halter.

Die Befestigungsschraube wirkt auf den Halter, der einen runden Schaft aufweist. Die Klemmkraft wird zwischen der Befestigungsschraube und bevorzugt mindestens zwei erhabenen Klemmflächen ausgeübt, die der Befestigungsschraube diametral gegenüberliegen.

Erfindungsgemäß ergibt sich durch den 90-Grad-Versatz zwischen der Klemmung Adapter/Halter und Adapter/Werkstückaufnahme eine besonders günstige Kraftverteilung. Die eher punktförmige Krafteinleitung sorgt für einen vergleichsweise hohen Druck und unterstützt insofern auch die Verdrehsicherung. Die erfindungsgemäße Lösung ist insofern stabiler und unabhängiger davon, ob eine Haltenase in eine entsprechende Nut an dem Halter eingetreten ist.

Insbsondere die Klemmschraube kann erfindungsgemäß aus einem vergleichsweise hartem Material hergestellt sein, das auch mit der Spitze leicht in das Material des Halters eindringen kann. Hierdurch wird insofern neben dem Kraftschluss ein zusätzlicher Formschluss hergestellt, der ebenfalls die Verdrehsicherung unterstützt. Besonders günstig ist es, wenn auch der Adapter aus gehärtetem Material besteht und so auch langfristig eine präzise Lagerpassung gewärleistet ist

Besonders günstig ist es, wenn die Befestigungsschraube und/oder die Klemmschraube und/ oder die Halteschraube als Madenschraube ausgebildet ist.

In vorteilhafter Ausgestaltung der Erfindung ist es vorgesehen, den Adapter in zwei Formen auszulegen, nämlich mit einer Haltenase, die sich im Winkel von 45° im Uhrzeigersinn zu der Befestigungsschraube erstreckt, und mit einer Haltenase, die sich im Winkel von 45° gegen den Uhrzeigersinn zu der Befestigungsschraube erstreckt. Die beiden Haltenasen sind dann gegeneinander betrachtet um 90° versetzt, und einer der Adapter erlaubt eine gegenüber den anderen Adapter um 90° versetzte Lagerposition des quaderförmigen Dentalfräsblocks, der - was die Form betrifft - entsprechend der WO 2002/09162 A1 ausgebildet sein kann.

In einer weiteren günstigen Ausgestaltung ist es vorgesehen, die Befestigungsschraube und die Klemmschraube als eine einzige Schraube auszubilden, die dann den Adapter durchdringt. An dieser Stelle ist der Adapter dann frei von einem Innengewinde, und die Klemmbefestigungsschraube ist in dem Klemmniederhalter geführt. So drückt dann die auf den Halter eingeleitete Kraft diesen an der gegenüberliegenden Seite gegen die beiden erhabenen Klemmflächen und über diese zugleich den Adapter in die gegenüberliegende Ecke.

Je nach der Auslegung des Halters, ist es günstig, eine oder zwei Klemmflächen explizit vorzusehen, die die erwünschte Gegenkraft bei der Anlage und die zugehörige Haftreibung bieten. Wesentlich ist es in diesem Zusammenhang auch, dass der Ansatzpunkt der Befestigungsschraube und die Klemmfläche oder die Klemmflächen einander diametral gegenüberliegen. Bevorzugt sind zwei Klemmflächen vorgesehen, die sich bezogen auf das Innengewinde beziehungsweise dessen Achse in einem Winkel von 135° zu dieser erstrecken, einer im Uhrzeigersinn und eine gegen den Uhrzeigersinn.

Die Klemmflächen erstrecken sich dann je um diese 135° Position herum, beispielsweise über einen Winkelbereich von 24°, also von 123° bis 147°, bezogen auf den Auftreffpunkt der Achse der Befestigungsschraube auf die Schaftaufnahme des Adapters.

Wenn die Schaftaufnahme kreisrund ist, können die Klemmflächen kurzerhand als gerade Flächen ausgebildet sein, das sie dann gegenüber der Kreisform erhaben sind, so dass die Schaftaufnahme an diesen Stellen je eine Kreisabschnittsform hat.

Derart ausgebildete Klemmflächen sind für die Aufnahme der erforderlichen Klemmkräfte bei guter Haftreibung besonders geeignet, wobei es sich versteht, dass auch beliebige andere Klemmflächen realisierbar sind, vorausgesetzt, diese liegen in der Schaftaufnahme der Befestigungsschraube gegenüber.

Besonders günstig ist es, die Befestigungsschraube mit einem Spitzenkonus auszubilden, der in das Material des Schafts des Halters eindringen kann. Bei dieser Lösung lässt sich der Dentalfräsblock samt Halter und Adapter kurzerhand einfach aus der Halteraufnahme, also der Werkstückaufnahme, entnehmen.

Ein weiterer Vorteil des erfindungsgemäßen Adapters ist der symmetrische Aufbau. Der Schaft des Halters lässt sich so in beide Seiten des Adpaters einstecken - und auch mit der Befestigungsschraube fixieren. Durch die erfindungsgemäße Verdrehsicherung lässt sich dann bei beiden gegenüberliegenden Klemmleisten der Dentalfräsblock nach Belieben in der 90°-Position oder der 0°-Position fixieren, wobei es sich versteht, dass auch die Orientierungsnase als Verdrehsicherung doppelt, also symmetrisch ausgebildet ist.

Der erfindungsgemäße Vorsprung, in dem die in einer Ausführungsform die Befestigungsschraube geführt ist, bietet auch die Möglichkeit, eine Greifhandhabe zu bilden, wenn der Adapter einmal ohne Dentalfräsblock in dem Klemmhalter fixiert ist, beispielsweise, wenn der Dentalfräsblock mit seinem Halter im Nachhinein, also ohne Adapter, montiert werden soll. Besonders günstig ist es insofern, dass der Vorsprung des Adapters an einer klemmkraftfreien Stelle ausgebildet ist, was die Klemmhalterlagerung betrifft.

Bevorzugt wird die Klemmkraft in einer demgegenüber um 90° versetzten Richtung aufgebracht, zwischen einander gegenüberliegenden Bereichen des Adapters, der über eine Klemmschraube zwischen dem Klemmniederhalter und der gegenüberliegenden Ecke gehalten ist. Hierzu weist der Adapter - an der dem Klemmniederhalter benachbarten Seite - eine Schrägfläche auf, die mit einer entsprechenden Schrägfläche des Klemmniederhalters korrespondiert. Weitere Vorteile, Einzelheiten und Merkmale der Erfindung ergeben sich aus der nachstehenden Beschreibung mehrerer Ausführungsbeispiele der Erfindung anhand der Zeichnungen.

Es zeigen:
- Fig. 1: eine schematische Detailansicht eines offenbarten Werkstückhalters, jedoch ohne den Dentalfräsblockhalteradapter und den Dentalfräsblockhalter sowie auch ohne den Dentalfräsblock;
- Fig. 2: eine Draufsicht auf einen offenbarten Werkstückhalter;
- Fig. 3: eine perspektivische Ansicht eines erfindungsgemäßen Dentalfräsblockhalteradapters in einer Ausführungsform;
- Fig. 4: der Dentalfräsblockhalteradapter gemäß Fig. 3; jedoch in einer anderen Ausführungsform;
- Fig. 5: ein Schnitt durch eine Ausführungsform eines erfindungsgemäßen Dentalfräsblockhalteradapters;
- Fig. 6: eine Draufsicht auf einen offenbarten Werkstückhalter, jedoch in einer anderen Ausführungsform; und
- Fig. 7: eine Stirnansicht einer anderen Ausführungsform eines erfindungsgemäßen Dentalfräsblockhalteradapters.

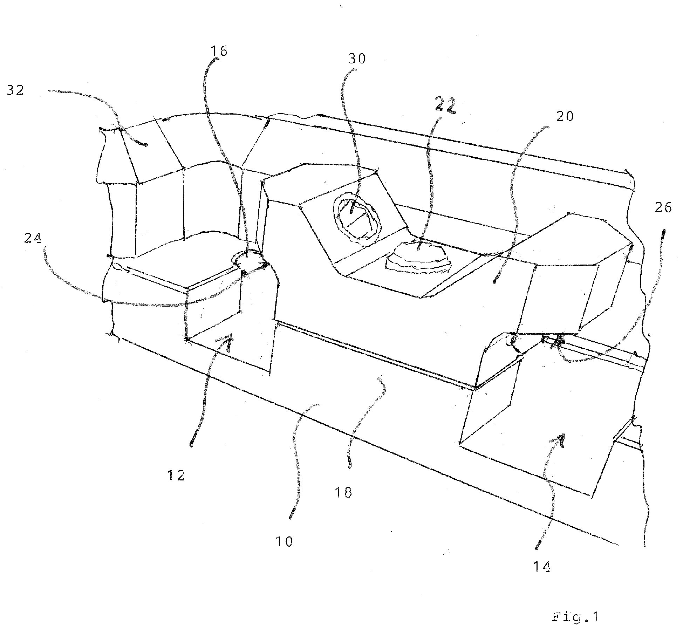

In Fig. 1 ist ein Werkstückhalter 10 ausschnittweise perspektivisch dargestellt. Der Werkstückhalter 10 weist in dem dargestellten Ausschnitt zwei Halteraufnahmen 12 und 14 auf, die als quaderförmige Vertiefungen einer Bodenplatte des Werkstückhalters ausgebildet sind. Die Halteraufnahmen sind im wesentlichen quaderförmig, abgesehen von einer Zusatzausnehmung 16, die beispielsweise dazu dienen kann, Späne oder Schleifstaub bei der spanabhebenden Bearbeitung aufzunehmen.

Zwischen den Halteraufnahmen 12 und 14 bildet die Bodenplatte eine Art Mittelpfosten 18. Dieser trägt einen Klemmniederhalter 20, der von einer zentralen Halteschraube 22 auf dem Werkstückhalter 12 bzw. dessen Bodenplatte gehalten ist.

Der Klemmniederhalter 20 weist oberhalb der Halteraufnahme 12 eine Schrägfläche 24, die der Halteraufnahme 12 zugewandt ist, und oberhalb der Halteraufnahme 14 eine Schrägfläche 26 auf, die der Halteraufnahme 14 zugewandt ist. Die Schrägflächen 24 und 26 überdecken die zugehörigen Halteraufnahmen 12 und 14 je etwa zur Hälfte. Sie erstrecken sich im Winkel von 45° zur Senkrechten, beispielsweise zu der von dem Werkstückhalter 10 aufgespannten Ebene. Zur Vermeidung von Kerbwirkungen ist der Übergang zwischen dem senkrechten Schenkel des Klemmniederhalters 20 und der betreffenden Schrägfläche mit einer Hohlkehle ausgerundet.

Die Halteraufnahmen 12 und 14 sind dafür bestimmt, Dentalfräsblockhalter, genauer gesagt, die Schäfte dieser, sicher geführt aufzunehmen. Dementsprechend sind die Schäfte im wesentlichen mit den gleichen geometrischen Abmessungen wie die Halteraufnahmen 12 und 14 ausgebildet, also eckig. Eine den Schrägflächen 24 bzw. 26 entsprechende Schrägfläche ist je an einem Schaft vorgesehen. Die Seitenführung in beiden Richtungen ist durch die Halteraufnahmen 12 und 14 vorgegeben, zumal ein recht geringes Lagerspiel an dieser Stelle vorgesehen ist, beispielsweise 50µm. Die Schrägflächen 24 und 26 üben jedoch eine Haltefunktion aus, in dem sie die Schäfte in die je von den Schrägflächen 24 und 26 abgewandte Ecken drücken. Hierzu weist jede Schrägfläche eine den Klemmniederhalter 20 durchtretende Klemmschraube 30 auf, wobei aus Fig. 1 lediglich die Klemmschraube 30 der Schrägfläche 24 ersichtlich ist; in der Praxis ist eine entsprechende Klemmschraube als Madenschraube auch in der Schrägfläche 26 und ebenfalls dem Klemmniederhalter 20 durchtretend vorgesehen.

Der Werkstückhalter 10 weist ferner einen Spannrahmen 32 auf. Dieser trägt nicht dargestellte Einspannelemente, an welchen der Werkstückhalter 10 an einer Werkstückführung mit zwei oder drei Achsen der zugehörigen Dentalfräsmaschine geführt ist.

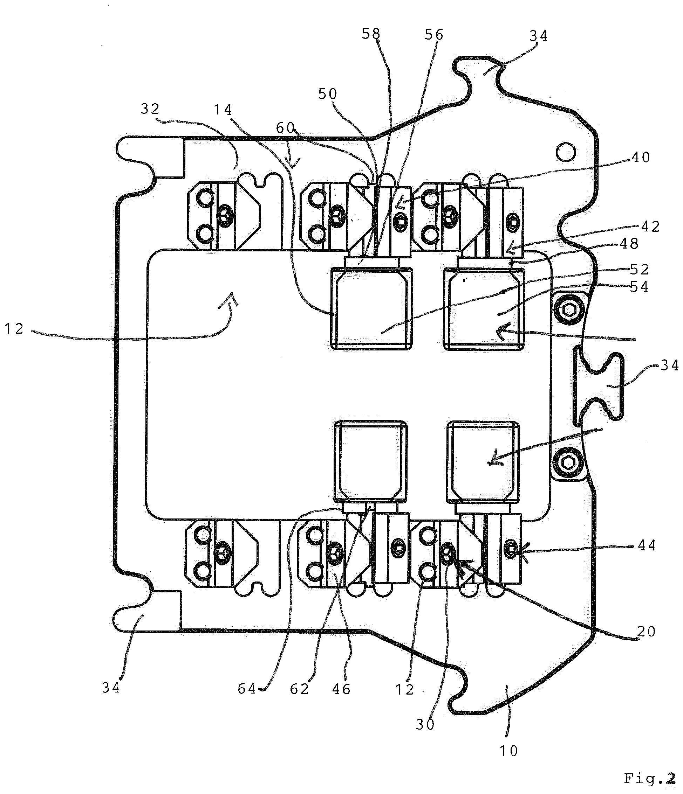

Aus Fig. 2 ist ein entsprechender Werkstückhalter 10 in der Draufsicht ersichtlich. Gleiche Bezugszeichen weisen hier wie auch in den weiteren Figuren auf gleiche Teile hin. Wie ersichtlich ist, sind mehrere Einspannelemente 34 am Spannrahmen 32 des Werkstückhalters 10 verteilt. Auch sind mehrere, nämlich insgesamt sechs Halteraufnahmen 12 an dem ringförmigen Spannrahmen verteilt. Diese weisen je nach einwärts, wobei drei Halteraufnahmen den anderen drei Halteraufnahmen gegenüberliegen und je zwei Halteraufnahmen zueinander koaxial ausgerichtet sind.

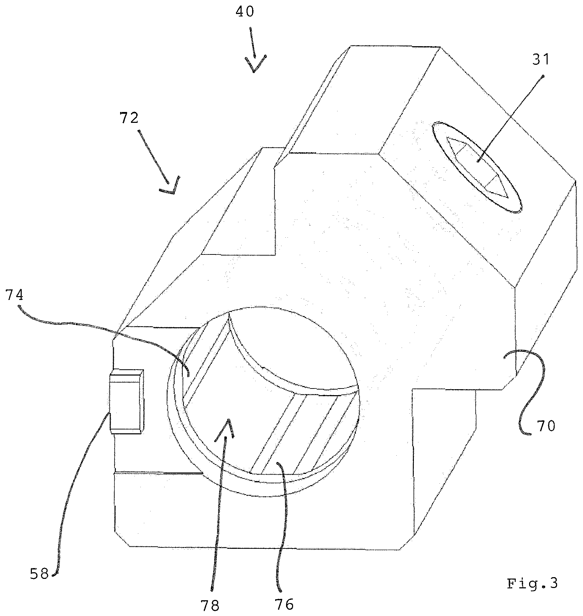

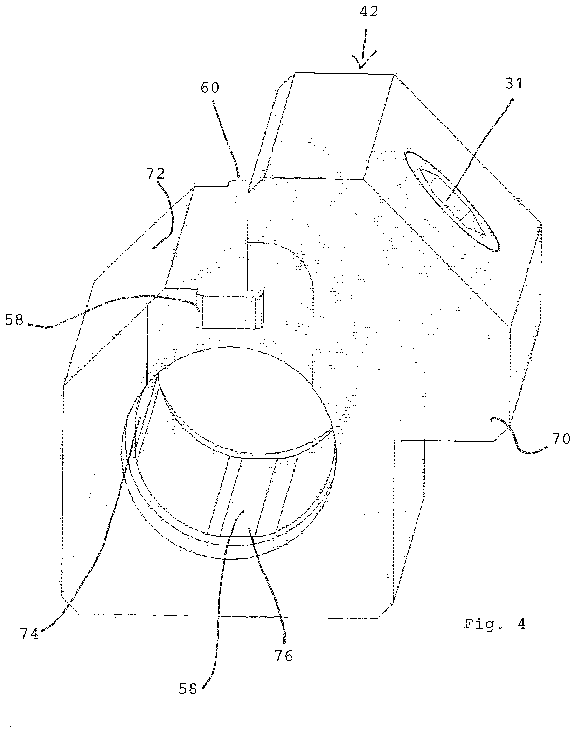

Die Halteraufnahmen sind für die Aufnahme von Schäften von Dentalfräsblöcken bestimmt. Erfindungsgemäß sind Dentalfräsblockhalteradapter 40, 42, 44, und 46 vorgesehen, die den aus den Figuren 3 und 4 besser ersichtlichen Aufbau aufweisen. Dieser Dentalfräsblockhalteradapter 40 bis 46 ist so ausgebildet, dass er in die zugehörige Halteraufnahme, beispielsweise die Halteraufnahmen 12 bzw. 14 passt und in sich einen runden Schaft des zugehörigen Dentalfräsblockhalters aufnimmt. Der kreisrunde Schaft läuft je in einem gegenüber dem Durchmesser des Schaftes etwas verdickten Flansch 48 bzw. 50 aus, der den zugehörigen Dentalfräsblock 52 bzw. 54 trägt.

Aus Fig. 2 ist ersichtlich, dass in dieser Darstellung der Dentalfräsblock 52 gegenüber dem Dentalfräsblock 54 schmaler ist. Tatsächlich ist der Dentalfräsblock 54 gegenüber dem Dentalfräsblock 52 um 90° gedreht, hat jedoch an sich die gleichen Abmessungen. Als Verdrehsicherung weist der zugehörige Flansch 48 bzw. 50 je eine Nut auf, wobei die Nut 56 aus Fig. 2 ersichtlich ist. Dort tritt eine Orientierungsnase 58 des Adapters 40 ein. Eine entsprechende Nase findet sich auch an dem Adapter 42, jedoch um 90° versetzt, wie es sich aus dem Vergleich der Figuren 3 und 4 ergibt.

Der Orientierungsnase 58 gegenüberliegend ist eine weitere Orientierungsnase 60 vorgesehen. Diese kommt bei der Montageposition des Adapters 46 zum Einsatz und greift dort in eine zugehörige Nut 62 des Flansches 64 ein.

Dies bedeutet, dass der Adapter 40 exakt dem Adapter 46 entspricht, während der Adapter 42 dem Adapter 44 entspricht.

Wie aus Fig. 2 darüber hinaus ersichtlich ist, sind die dortigen Klemmniederhalter 20 nicht entsprechend Fig. 1 symmetrisch ausgebildet, so dass ein Klemmniederhalter je zwei Dentalfräsblockadapter fixiert. Viel mehr ist pro Halteraufnahme ein Klemmniederhalter 20 vorgesehen, der über zwei Halteschrauben 22 mit dem Werkstückhalter 10 im übrigen befestigt ist.

Aus Fig. 3 ist die Ausgestaltung eines Dentalfräsblockhalteradapters 40 ersichtlich. Die Befestigungsschraube 31 ist in einem im Querschnitt im wesentlichen dreieckförmigen Vorsprung 70 geführt und durchtritt diesen. Im Winkel vom 90° versetzt zu dem Vorsprung 70 ist die Schrägfläche 72 vorgesehen, die für die Anlage an der Schrägfläche 26 bestimmt ist.

Wenn der kreisrunde Schaft des Dentalfräsblockhalters in den Adapter 40 eingesteckt ist, wird die Klemmschraube 30 angezogen. Sie drückt dann den Schaft gegen zwei Klemmflächen 74 und 76, die sich in einem symmetrischen Winkel zu der Befestigungsschraube 31 erstrecken. Die Klemmflächen 74 und 76 sind als plane Flächen ausgebildet, die demgegenüber gegenüber der im übrigen kreisförmigen Schaftaufnahme 78 des Adapters 40 vorspringen; deren Radius cm 0,1cm größer als der Schaftradius ist.

Die Orientierungsnase 58 erstreckt sich in der dargestellten Ausführungsform des Adapters 40 an der Stelle, an der auch die Klemmfläche 74 innen vorgesehen ist.

Dies ist ein Unterschied zu der anderen Ausführungsform der Adapters 42, der aus Fig. 4 ersichtlich ist. Dort erstreckt sich die Orientierungsnase 58 gegenüber der Ausführungsform gemäß Fig. 3 um 90° versetzt, also der Klemmfläche 76 diametral gegenüberliegend.

Eine entsprechende Orientierungsnase 60 ist an der Rückseite des Adapters 42 vorgesehen, während die gegenüberliegende Orientierungsnase zur Orientierungsnase 58 aus Fig. 3 in der Figur nicht ersichtlich ist.

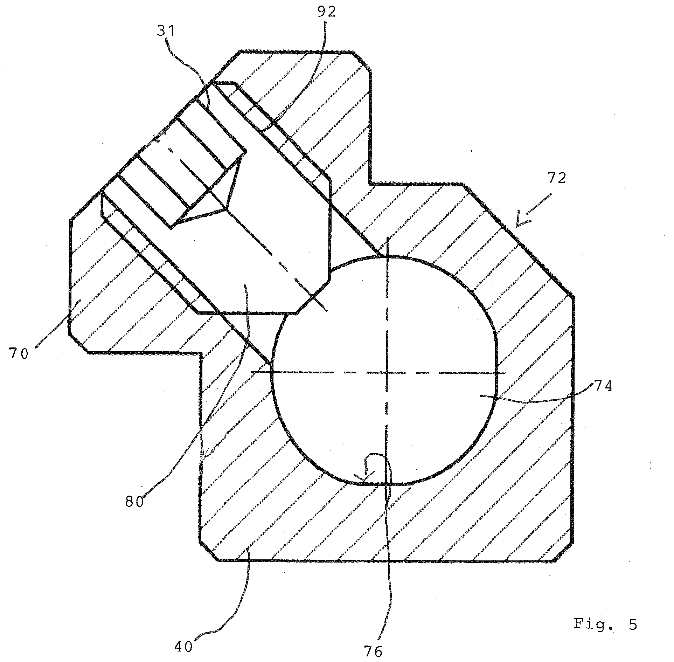

Aus Fig. 5 ist ersichtlich, in welcher Weise die Klemmschraube 30 des Adapters 40 den Vorsprung 70 durchtritt. Sie weist einen Spitzenkonus 80 auf, der dafür bestimmt ist, mit seiner Spitze den Schaft des Dentalfräsblockhalters intensiv gegen die Schrägflächen 74 und 76 zu drücken.

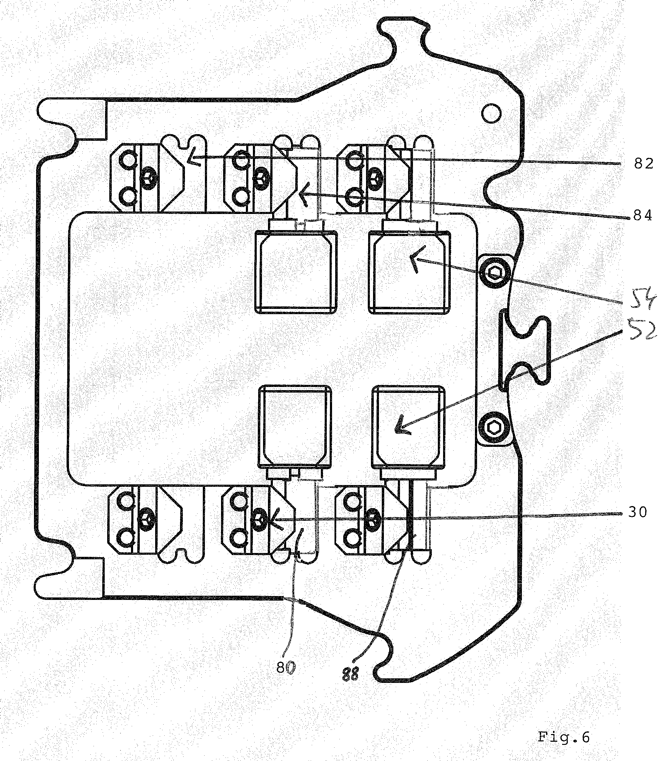

Aus Fig. 6 ist eine weitere Ausführungsform eines erfindungsgemäßen Dentalfräsblockhalteradapters bzw. des zugehörigen Werkstückhalters ersichtlich. Der zugehörige Adapter 82, 84, 86 bzw. 88 weist keine separaten Klemmschrauben 30 bzw. Befestigungsschrauben 31 auf; vielmehr durchdringt die dortigen Klemmschraube 30 den Adapter 88 und wirkt unmittelbar auf den Schaft.

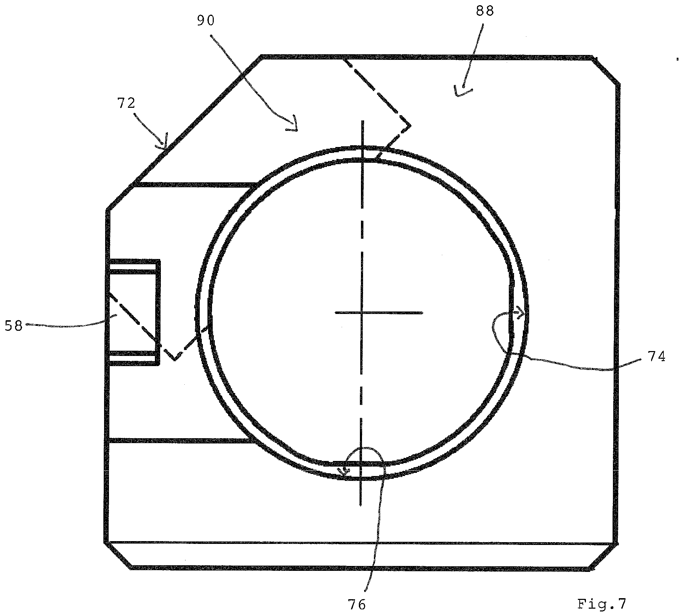

Aus Fig. 7 ist eine entsprechend modifizierte Ausgestaltung eines Adapters 88 ersichtlich. Es ist eine Durchtrittsausnehmung 90 vorgesehen, die die Schrägfläche 72 durchtritt und für die Aufnahme der zugehörigen Klemmschraube 30 bestimmt ist.

Während die Befestigungsschraube 31 gemäß Fig. 5 in dem dortigen Innengewinde 92 des Adapters 40 geführt ist, ist der Adapter 88 in dieser Ausführungsform gewindefrei, und die Führung der zugehörigen Klemmschraube erfolgt in dem zugehörigen Klemmniederhalter 20.

Auch bei der Ausführungsform gemäß Fig. 6 und 7 sind Orientierungsnasen vorgesehen, wobei die Orientierungsnase 58 aus Fig. 7 ersichtlich ist. Ferner sind auch Klemmflächen 74 und 76 vorgesehen, die für die Anlage an dem Schaft des zugehörigen Dentalfräsblockhalter bestimmt sind und eine sichere Klemmung des Dentalfräsblockhalters an dem Werkstückhalter in einem Zuge ermöglichen.

## Patentansprüche

1. Dentalfräsblockhalteradapter mit einem Dentalfräsblock (52; 54) oder Dentalschleifblock, der an einem Dentalfräsblockhalter befestigt ist, insbesondere aufgeklebt ist, wobei der Dentalfräsblockhalter einen runden Schaft aufweist, der in dem Dentalfräsblockhalteradapter (40) aufgenommen ist, wobei der Dentalfräsblockhalteradapter (40) mindestens ein Innengewinde (92) für die Aufnahme einer Befestigungsschraube (31), die auf den Schaft des Dentalfräsblockhalters wirkt, aufweist, **dadurch gekennzeichnet, dass** in einer kreisrunden Schaftaufnahme (78) des Dentalfräsblockhalteradapters (40) der Befestigungsschraube (31) gegenüberliegend mindestens eine gegenüber der Kreisform der Schaftaufnahme (78) erhabene Klemmfläche (74), insbesondere mindestens zwei erhabene Klemmflächen (74 und 76), ausgebildet ist bzw. sind, an welche der Schaft anliegt.

2. Dentalfräsblockhalteradapter nach einem der vorhergehenden Ansprüche, **dadurch gekennzeichnet, dass** der Dentalfräsblockhalteradapter (40) mindestens eine vorspringende Orientierungsnase (58) aufweist, die dafür bestimmt ist, in eine Nut (56) eines Werkstückhalters (10) einzutreten.

3. Dentalfräsblockhalteradapter nach einem der Ansprüche 1 oder 2, **dadurch gekennzeichnet, dass** die Befestigungsschraube (31) einen Spitzenkonus (80) aufweist und aus einem Material besteht, dass härter als das Material des Werkstückhalters (10) ist.

4. Dentalfräsblockhalteradapter nach einem der vorhergehenden Ansprüche, **dadurch gekennzeichnet, dass** zwei Adapter (40) vorgesehen sind, deren Orientierungsnasen (58) um 90° zueinander versetzt sind.

## Claims

1. A dental milling block holder adapter comprising a dental milling block (52; 54) or dental grinding block which is attached, especially glued, to a dental milling block holder, the dental milling block holder having a round shaft which is accommodated in the dental milling block holder adapter (40), the dental milling block holder adapter (40) having at least one internal thread (92) for accommodating a fastening bolt (31), which is operable to act on the shaft of the dental milling block holder, **characterized in that** In a circular shaft receptacle (78) of the dental milling block holder adapter (40), opposite to the fastening bolt (31), at least one clamping surface (74), especially at least two raised clamping surfaces (74 and 76), is or are formed in a circular shaft receptacle (78) of the dental milling block holder adapter (40), and is raised relative to the circular shape of the shaft receptacle (78) against which the shaft abuts.

2. The dental milling block holder adapter according to one the preceding claims, **characterized in that** the dental milling block holder adapter (40) comprises at least one projecting orientation lug (58) which Is designed to be inserted into a groove (56) of a workpiece holder (10).

3. The dental milling block holder adapter according to one of claims 1 or 2, **characterized in that** the fastening bolt (31) comprises a tip cone (80) and Is made of a material, which Is harder than the material of the workpiece holder (10).

4. The dental milling block holder adapter according to one of the preceding claims, **characterized in that** two adapters (40) are provided, the orientation lugs (58) of which are offset by 90° in relation to each other.

## Revendications

1. Adaptateur de porte-bloc de fraisage dentaire avec un bloc de fraisage dentaire (52; 54) ou un bloc de meulage dentaire qui est fixé, en particulier collé, sur un porte-bloc de fraisage dentaire, où le porte-bloc de fraisage dentaire présente une tige ronde qui est logée dans un adaptateur de porte-bloc de fraisage dentaire (40), où l'adaptateur de porte-bloc de fraisage dentaire (40) présente au moins un filetage intérieur (92) pour loger une vis de fixation (31) qui agit sur la tige de l'adaptateur du porte-fraise dentaire, **caractérisé en ce que** dans un logement de tige circulaire (78) de l'adaptateur (40) du support de bloc de fraisage dentaire, en face de la vis de fixation (31) au moins une surface de serrage (74) surélevée par rapport à la forme circulaire du logement de tige (78) est formée, en particulier au moins deux surfaces de serrage surélevées (74 et 76) sont formées contre laquelle ou lesquelles repose la tige.

2. Adaptateur de porte-bloc de fraisage dentaire selon l'une des revendications précédentes, **caractérisé en ce que** l'adaptateur de porte-bloc de fraisage dentaire (40) présente au moins une patte d'alignement (58) prévue pour entrer dans une rainure (56) d'un porte-pièce (10).

3. Adaptateur de porte-pièce de fraisage dentaire selon l'une des revendications 1 ou 2, **caractérisé en ce que** la vis de fixation (31) présente un cône pointu (80) et est constituée d'un matériau plus dur que le matériau du porte-pièce (10).

4. Adaptateur de support de bloc de fraisage dentaire selon l'une des revendications précédentes, **caractérisé en ce que** deux adaptateurs (40) sont prévus, dont les pattes d'alignement (58) sont décalées de 90° l'une par rapport à l'autre.
